# EUROPÄISCHE PATENTANMELDUNG

(11) **EP 4 609 686 A1**
(43) Veröffentlichungstag der Anmeldung: **03.09.2025**
(21) Anmeldenummer: 24160246.5
(22) Anmeldetag: 28.02.2024
(51) Int. Cl.: A01C 5/06, A01C 7/20

(54) **ANORDNUNG FÜR EINE SÄREIHE EINER LANDWIRTSCHAFTLICHEN MASCHINE, SÄREIHE SOWIE LANDWIRTSCHAFTLICHE SÄMASCHINE**

(71) Anmelder: Kverneland Group Soest GmbH, 59494 Soest (DE)
(72) Erfinder: SCHUMACHER, Ferdinand, 59494 Soest (DE)
(74) Vertreter: Bittner, Thomas L.

(57) **Zusammenfassung**

Die Erfindung betrifft eine Anordnung (1) für eine Säreihe einer landwirtschaftlichen Sämaschine sowie eine Säreihe und eine landwirtschaftliche Sämaschine. Die Anordnung (1) weist Folgendes auf: einen Tragrahmen (9); ein Schneidscheibenpaar (2), bei dem eine erste und eine zweite Schneidscheibe (3, 4) einander gegenüberliegend und so einen Zwischenraum (8) ausbildend angeordnet sind, wobei das Schneidscheibenpaar (2) eingerichtet ist, bei einer Bodenbearbeitung eine Saatfurche zum Aufnehmen von auszubringendem Saatgut herzustellen; eine am Tragrahmen (9) gebildeten Scheibenhalteeinrichtung (5), mittels welcher die erste und die zweite Schneidscheibe (3, 4) jeweils drehbar gelagert sind; ein Fallrohr (10), welches sich zumindest abschnittsweise in dem Zwischenraum (8) zwischen der ersten und der zweiten Schneidscheibe (3, 4) erstreckt und endseitig einen Fallrohrausgang zum Ausbringen des Saatguts zur Saatfurche hinaufweist; und eine das Fallrohr (10) haltenden Rohrhalteeinrichtung, die mittels einer Befestigungseinrichtung am Tragrahmen (9) angeordnet ist. Die Befestigungseinrichtung der Rohrhalteeinrichtung ist in Bezug auf den Zwischenraum (8) zwischen der ersten und der zweiten Schneidscheibe (3, 4) außenliegend gebildet. (Fig. 2)

## Beschreibung

Die Erfindung betrifft eine Anordnung für eine Säreihe einer landwirtschaftlichen Sämaschine, eine Säreihe sowie eine landwirtschaftliche Sämaschine.

### Hintergrund

Landwirtschaftliche Sämaschinen dienen dazu, Saatkörner in den Boden einzubringen. Hierzu sind landwirtschaftliche Sämaschinen bekannt, die über eine Reihenanordnung von mehreren Säreihen verfügen, um so quer zur Fahrtrichtung eine gewünschte Arbeitsbreite der landwirtschaftlichen Sämaschine beim Einbringen des Saatkorns auszubilden. Mit Hilfe der Sähreihe wird bei der Bodenbearbeitung jeweils mindestens eine Saatfurche hergestellt, in welche die Saatkörner dann eingebracht werden. Zu diesem Zweck weist die Säreihe eine Schneidscheibe oder ein Schneidscheibenpaar auf, mit dem beim Bewegen der landwirtschaftlichen Sämaschine über den Boden die Saatfurche in gewünschter Tiefe ausgebildet wird, um dann in der Saatfurche das Saatkorn einzubringen.

Zum Einstellen einer Bodenarbeitstiefe der Schneidscheibe beim Ausbilden der Saatfurche ist der Schneidscheibe regelmäßig ein Tiefeneinstellrad zugeordnet, welches auch als Gauge-Wheel bezeichnet wird. Das Tiefeneinstellrad ist in seiner Lage relativ zur Schneidscheibe einstellbar, um unterschiedliche Bodenarbeitstiefen einzustellen.

Zum Ausbringend es Saatguts ist dem Schneidscheibenpaar ein Fall- oder Schussrohr zugeordnet, welches die auszubringenden Saatkörner über einen Fallrohreingang empfängt, um sie entlang des Fallrohrs zum Fallrohrausgang zu leiten und über diesen zur mittels des Schneidscheibenpaars hergestellten Saatfurche hin auszustoßen. Auf diese Weise ist es mittels des Fallrohres ermöglicht, die Saatkörner in Fahrtrichtung bei der Bodenbearbeitung hinter dem Schneidscheibenpaar in die Saatfurche einzubringen.

Im Dokument EP 3 213 616 B1 ist eine Anordnung mit Schneidscheibenpaar und zugeordneten Tiefeneinstellrädern für eine Sämaschine offenbart, bei der das Fallrohr mit einer Rohrhalteeinrichtung gehalten wird, wobei die Befestigung in einem Zwischenraum zwischen den einander zugeordneten Schneidscheiben des Schneidscheibenpaares ausgebildet ist.

### Zusammenfassung

Aufgabe der Erfindung ist es, eine Anordnung für eine Säreihe einer landwirtschaftlichen Sämaschine, sowie eine Säreihe und eine landwirtschaftliche Sähmaschine zu schaffen, bei denen ein Fall- oder Schussrohr auf verbesserte Art und Weise in seiner Arbeitsstellung relativ zu einem Schneidscheibenpaar gehalten ist.

Zur Lösung sind eine Anordnung für eine Säreihe einer landwirtschaftlichen Maschine nach dem unabhängigen Anspruch 1 sowie eine Säreihe und eine landwirtschaftliche Maschine nach dem nebengeordneten Ansprüchen 14 und 15 geschaffen. Ausgestaltungen sind Gegenstand von abhängigen Unteransprüchen.

Nach einem Aspekt ist eine Anordnung für eine Säreihe einer landwirtschaftlichen Sämaschine geschaffen, die eine Tragrahmen aufweist. Die Anordnung weist weiterhin ein Schneidscheibenpaar auf, bei dem eine erste und eine zweite Schneidscheibe einander gegenüberliegend und so einen Zwischenraum ausbildend angeordnet sind, wobei das Schneidscheibenpaar eingerichtet ist, bei einer Bodenbearbeitung eine Saatfurche zum Aufnehmen von auszubringendem Saatgut herzustellen. Weiterhin weist die Anordnung Folgendes auf: einen am Tragrahmen gebildeten Scheibenhalteeinrichtung, mittels welcher die erste und die zweite Schneidscheibe jeweils drehbar gelagert sind; ein Fallrohr, welches sich zumindest abschnittsweise in dem Zwischenraum zwischen der ersten und der zweiten Schneidscheibe erstreckt und endseitig einen Fallrohrausgang zum Ausbringen des Saatguts zur Saatfurche hinaufweist; und eine das Fallrohr haltenden Rohrhalteeinrichtung, die mittels einer Befestigungseinrichtung am Tragrahmen angeordnet ist. Die Befestigungseinrichtung der Rohrhalteeinrichtung ist in Bezug auf den Zwischenraum zwischen der ersten und der zweiten Schneidscheibe außenliegend gebildet.

Weiterhin sind eine Säreihe mit der Anordnung sowie eine landwirtschaftliche Maschine mit der Säreihe vorgesehen.

Das Vorsehen der Befestigungseinrichtung der Rohrhalteeinrichtung außerhalb des Zwischenraums zwischen der ersten und der zweiten Schneidscheibe minimiert eine Inanspruchnahme oder ein Ausfüllen des Zwischenraumes zwischen der ersten und der zweiten Schneidscheibe durch die Bauteile der Rohrhalteeinrichtung. Im Betrieb wird bei der Bodenbearbeitung so die Gefahr einer Anhaftung von Boden an der Befestigungseinrichtung der Rohrhalteeinrichtung im Bereich des Zwischenraums vermieden. Solche ungewünschten Bodenanhaftungen können die ordnungsgemäße Funktion des Schneidscheibenpaares behindern, insbesondere deren korrekte Drehung beim Ausbilden der Saatfurche. Weiterhin ist eine Montage und Demontage der Rohrhalteeinrichtung mit dem hiervon gehaltenen Fallrohr erleichtert, zum Beispiel zum Warten oder Wechseln des Fallrohres.

Das Fallrohr kann endseitig zum Fallrohrausgang hin entgegen der Fahrtrichtung bei der Bodenbearbeitung gekrümmt sein, was ein Ausbringen der Saatkörner über den Fallrohrausgang hinter das Schneidscheibenpaar unterstützt.

Die Rohrhalteeinrichtung und / oder das Fallrohr können aus Metall oder Kunststoff bestehen. Im Fall der Verwendung eines Kunststoffmaterials können sie als Spritzgussbauteile ausgeführt sein.

Die Rohrhalteeinrichtung kann einen Rohrhaltearm aufweisen, welcher sich in Bezug auf die erste und die zweite Schneidscheibe entlang eines Kreisbogenabschnitts erstreckt. Hierbei kann der Rohrhaltearm als gekrümmter oder gebogener Abschnitt ausgebildet sein, welcher im Wesentlichen parallel zum Umfangsverlauf der Schneidscheiben im Bereich des Kreisbogenabschnitts und beabstandet hierzu verläuft. Mit Blick von oben auf das Schneidscheibenpaar kann der Rohrhaltearm bei dieser oder anderen Ausführungsbeispielen im Wesentlichen mittig angeordnet sein.

Der Rohrhaltearm der Rohrhalteeinrichtung kann zumindest teilweise in dem Zwischenraum zwischen der ersten und der zweiten Schneidscheibe angeordnet sein, wobei sich Armendabschnitte zum Ausbilden der Befestigung der Rohrhalteeinrichtung mittels der Befestigungseinrichtung außerhalb des Zwischenraums erstrecken können. Die Armendabschnitte können auf gegenüberliegenden Endseiten des Rohrhaltearms angeordnet sein.

Mit Blick von der Seite auf das Schneidscheibenpaar kann der Rohrhaltearm in Bezug auf die Fahrtrichtung bei der Bodenbearbeitung oberhalb einer hinteren Schneidscheibenhälfte angeordnet sein.

Der Rohrhaltearm kann in einem Beispiel eine oder mehrere Versteifungsrippen zur Unterstützung der mechanischen Stabilität aufweisen. Ein oder mehrere der Versteifungsrippen können in Längsrichtung des Rohrhaltearms verlaufen, beispielsweise im Wesentlichen über eine Gesamtlänge des Rohrhaltearms.

Die Rohrhalteeinrichtung, insbesondere der Rohrhaltearm, kann an einem schwenkbaren Hebelarm des Tragrahmens angeordnet sein, welcher sich in horizontaler Richtung erstreckt.

Ein Fallrohreingang des Fallrohres, über welchen das Fallrohr die auszubringenden Saatkörner empfängt, kann in einer Ausgestaltung oberhalb des Rohrhaltearms oder alternativ in einer Ebene mit dem Rohrhaltearm angeordnet sein.

Der Rohrhaltearm kann im Bereich des Kreisbogenabschnitts den Zwischenraum zwischen der ersten und der zweiten Schneidscheibe zumindest teilweise abdeckend ausgeführt sein. Der Rohrhaltearm kann mit Blick von oben auf das Schneidscheibenpaar den Zwischenraum zwischen der ersten und der zweiten Schneidscheibe im Wesentlichen vollständig über- oder abdeckend ausgeführt sein, wodurch ein Eindringen vom Boden in den Zwischenraum zumindest im Bereich des Kreisbogenabschnitts minimiert oder vollständig verhindert ist.

An der Rohrhalteeinrichtung kann ein den Zwischenraum zwischen der ersten und der zweiten Schneidscheibe oben abdeckendes Abdeckbauteil angeordnet sein, zum Beispiel an dem Rohrhaltearm. Das Abdeckbauteil behindert das Eindringen von Boden bei der Bodenbearbeitung in den Zwischenraum zwischen der ersten und der zweiten Schneidscheibe, wahlweise in wahlweiser Ergänzung zur Abdeckwirkung des Rohrhaltearms. Das Abdeckbauteil kann lösbar oder abnehmbar an der Rohrhalteeinrichtung montiert sein. In einer Ausgestaltung kann eine einstückige Anformung des Abdeckbauteils vorgesehen sein, beispielweise am Rohrhaltearm. Das Abdeckbauteil kann sich in einer Ausgestaltung mindestens über den Kreisbogenabschnitt oder darüber hinaus erstrecken.

Die Rohrhalteeinrichtung kann auf gegenüberliegenden Endseiten in Bezug auf den Zwischenraum zwischen der ersten und der zweiten Schneidscheibe jeweils außenliegend an dem Tragrahmen befestigt sein. Die lösbare Montage des Rohrhaltearms kann beispielsweise mittels einer Steck- und / oder Schraubverbindung ausgeführt sein. Verbindungen zum Ausbilden der lösbaren Montage des Rohrhaltearms sind hierbei selbst im Wesentlichen vollständig außerhalb des Zwischenraums zwischen der ersten und der zweiten Schneidscheibe angeordnet.

Eine in Fahrtrichtung bei der Bodenbearbeitung vorlaufende Endseite kann der Rohrhalteeinrichtung kann an einem ersten Rahmenbauteil des Tragrahmens befestigt sein, welches mit der Scheibenhalteeinrichtung gebildet ist. Die Befestigung an dem ersten Rahmenbauteil kann hierbei beispielweise mittels eines der Armendabschnitte an dem Rohrhaltearm erfolgen. Zum Beispiel kann eine lösbare Befestigung vorgesehen sein. Die Scheibenhalteeinrichtung kann sich in den Zwischenraum zwischen der ersten und der zweiten Schneidscheibe hinein erstrecken und dort endseitig eine Lagereinrichtung zur drehbaren Aufnahme der Schneidscheiben aufweisen.

Eine in Fahrtrichtung bei der Bodenbearbeitung nachlaufende Endseite der Rohrhalteeinrichtung kann an einem zweiten Rahmenbauteil befestigt sein, an dem eine Radhalteeinrichtung zur drehbaren Lagerung von dem Scheibenpaar zugeordneten Tiefeneinstellrädern gebildet ist. Die Befestigung an dem zweiten Rahmenbauteil kann hierbei beispielweise mittels eines der Armendabschnitte an dem Rohrhaltearm erfolgen. Zum Beispiel kann eine lösbare Befestigung vorgesehen sein.

Die dem Schneidscheibenpaar zugeordneten Tiefeneinstellräder sind relativ zu den Schneidscheiben verlagerbar, insbesondere mittels Schwenken, derart, dass auf diese Weise eine Bodenarbeitstiefe für die Schneidscheiben bei der Bodenbearbeitung zum Ausbilden der Saatfurche einstellbar ist. Hierzu kann den Tiefeneinstellrädern eine Einstelleinrichtung zugeordnet sein, zum Beispiel eine manuelle, eine hydraulische und / oder eine elektrische Einstelleinrichtung, mit der die Tiefeneinstellräder relativ zum Schneidscheibenpaar verlagerbar sind.

Die Radhalteeinrichtung für die Tiefeneinstellräder kann einen in Bezug auf das Schneidscheibenpaar und das zugeordnete Tiefeneinstellrad außenliegenden Radhaltearm aufweisen, welcher endseitig eine Achseneinrichtung zum drehbaren Aufnehmen des jeweiligen Tiefeneinstellrads aufweist. Die außenliegende Anordnung des Radhaltearms ermöglicht es insbesondere, einen jeweiligen Zwischenraum zwischen dem Schneidscheibenpaar und den Tiefeneinstellrädern auf den gegenüberliegenden Seiten des Schneidscheibenpaares zu minimieren, wodurch Anhaftungen von Boden am Schneidscheibenpaar bei der Bodenbearbeitung entgegengewirkt wird, insbesondere dadurch, dass die Tiefeneinstellräder solche Anhaftungen optimiert abstreifen.

Die Tiefeneinstellräder können mit Hilfe des außenliegenden Radhaltearms in einer Schubstellung angeordnet sein, derart, dass die Tiefeneinstellräder bei der Bodenbearbeitung zum Herstellen der Saatfurche in Fahrtrichtung geschoben werden.

Die Rohrhalteeinrichtung kann sich bis in einen Bereich oberhalb der Tiefeneinstellräder erstrecken.

Das Fallrohr kann an der Rohrhalteeinrichtung einstückig angeformt sein, zum Beispiel am Rohrhaltearm. Eine solche Ausbildung kann zum Beispiel mittels Herstellen des Rohrhaltearms und des Fallrohrs in einem Spritzgussbauteil realisiert werden. Auch ein Anschweißen des Fallrohrs an dem Rohrhaltearm kann vorgesehen sein.

Das Fallrohr kann an der Rohrhalteeinrichtung in einem Durchbruch aufgenommen sein, zum Beispiel am Rohrhaltearm. Im Bereich des Durchbruchs kann das Fallrohr einstückig an die Rohrhalteinrichtung angeformt sein.

Die Rohrhalteeinrichtung kann als Monobauteil ausgeführt sein, welches auf gegenüberliegenden Endseiten mittels der Befestigungseinrichtung am Tragrahmen befestigt ist. Das Monobauteil bildet eine einstückige Ausführung der Rohrhalteeinrichtung. Das Monobauteil kann hierbei mit dem Rohrhaltearm gebildet sein, welcher sich in Bezug auf die erste und die zweite Schneidscheibe entlang des Kreisbogenabschnitts erstreckt, wodurch das Monobauteil in einer Ausgestaltung als ein Monohaltearm gebildet sein kann. Die vorangehend im Zusammenhang mit dem Rohrhaltearm beschriebenen Ausgestaltungen können einzeln oder in beliebiger Kombination für das Monobauteil entsprechend vorgesehen sein, auch wenn dieses ohne den sich in Bezug auf die erste und die zweite Schneidscheibe entlang des Kreisbogenabschnitts erstreckenden Radhaltarm gebildet ist.

An der Rohrhalteeinrichtung kann ein Stützelement angeformt sein, welches das Fallrohr stützt und zumindest teilweise im Zwischenraum zwischen der ersten und der zweiten Schneidscheibe angeordnet ist. Das Stützelement fördert eine Versteifung des Fallrohres und somit eine mechanische Stabilisierung des sich in den Zwischenraum zwischen der ersten und der zweiten Schneidscheibe erstreckenden Fallrohrs, so dass dieses möglichst lagestabil zwischen den Schneidscheiben gehalten wird.

An dem Fallrohr kann außenseitig ein das Fallrohr mechanisch stabilisierendes Versteifungsbauteil angeordnet sein, welches zumindest teilweise im Zwischenraum zwischen der ersten und der zweiten Schneidscheibe angeordnet ist.

An der Rohrhalteeinrichtung können eine oder mehrere Versteifungsrippen ausgebildet sein, zum Beispiel am Rohrhaltearm und / oder am Monobauteil, beispielweise in Längsrichtung und / oder quer zur Längsrichtung des Rohrhaltearms / Monobauteil. Insbesondere in Längsrichtung verlaufende Verstärkungsrippen können den außenliegenden Abschnitt im Wesentlichen vollständig erfassend ausgebildet sein.

In Verbindung mit der Säreihe sowie der landwirtschaftlichen Sämaschine können die vorangehend im Zusammenhang mit der Anordnung erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung für eine Säreihe einer landwirtschaftlichen Sämaschine von der Seite;
- Fig. 2: eine schematische Darstellung der Anordnung aus Fig. 1 von oben;
- Fig. 3: eine schematische Darstellung der Anordnung aus Fig. 1 mit nur einer Säscheibe von der Seite;
- Fig. 4: eine schematische Darstellung der Anordnung aus Fig. 3 von schräg hinten und
- Fig. 5: eine schematische perspektivische Darstellung einer Anordnung für eine Säreihe einer Sämaschine mit Tiefeneinstellrädern.

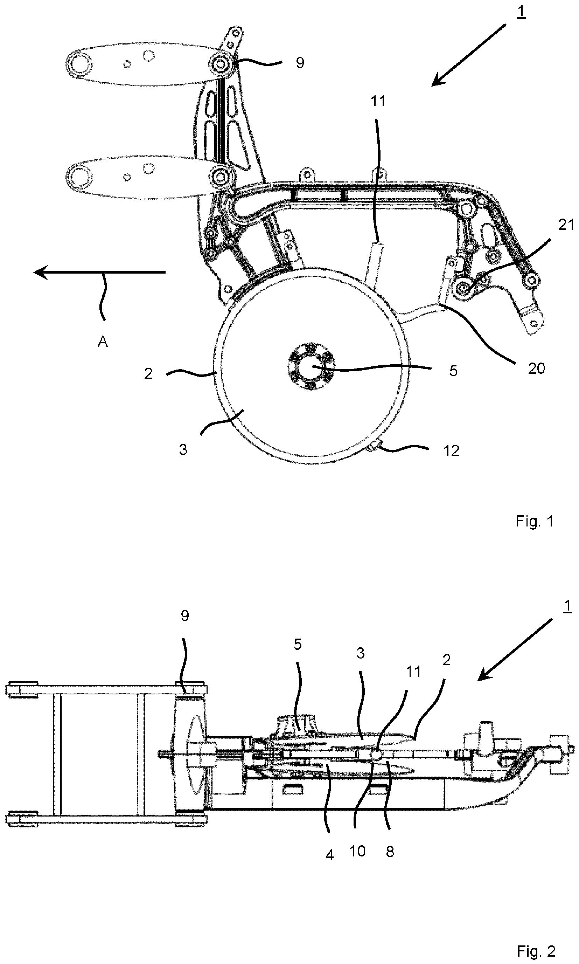

Fig. 1 bis 5 zeigen schematische Darstellungen einer Anordnung 1 für eine Säreihe einer Sämaschine. Mit Hilfe der Anordnung 1 wird beim Betrieb der landwirtschaftlichen Sämaschine eine Saatfurche ausgebildet, um hierin Saatkörner abzulegen. Zum Herstellen der Saatfurche weist die Anordnung 1 ein Schneidscheibenpaar 2 mit einer ersten und einer zweiten Schneidscheibe 3, 4 auf, welche gemäß Fig. 2 in einer V-Stellung relativ zueinander angeordnet sind.

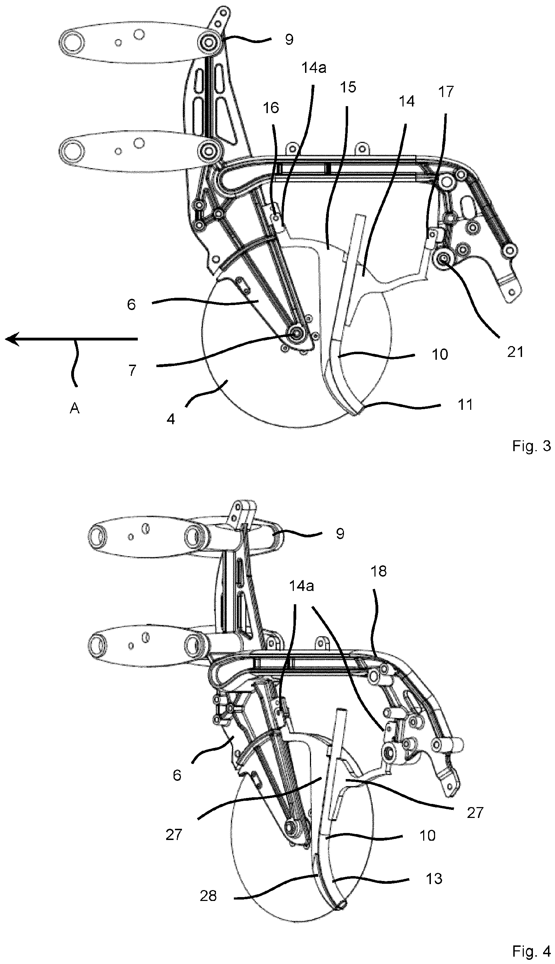

Die erste und die zweite Schneidscheibe 3, 4, von denen in den Fig. 3 und 4 zur vereinfachten Darstellung die zweite Schneidscheibe 4 weggelassen ist, sind mit Hilfe einer Schneidscheibenhalteeinrichtung 5 drehbar gelagert. Die Schneidscheibenhalteeinrichtung 5 weist einen Scheibenhaltearm 6 auf, an dem endseitig eine Achseneinrichtung 7 zur drehbaren Lagerung der ersten und der zweiten Schneidscheibe 3, 4 angeordnet ist. Der Scheibenhaltearm 6 erstreckt sich in einen Zwischenraum 8 zwischen der ersten und der zweiten Schneidscheibe 3, 4 hinein. Die Scheibenhalteeinrichtung 5 ist an einem Tragrahmen 9 der Anordnung 1 gebildet.

Die Anordnung 1 weist ein Fall- oder Schussrohr 10 auf, welches eingerichtet ist, über einen Fallrohreingang 11 Saatkörner aufzunehmen, diese dann entlang des Fallrohrs 10 zu transportieren, bis hin zu einem Fallrohrausgang 12, um dort die Saatkörner in die zuvor mittels des Schneidscheibenpaares 2 hergestellte Saatfurche einzubringen. Die Saatkörner können hierbei aufgrund der Gravitationskraft in dem Fallrohr 10 nach unten fallen. Es kann vorgesehen sein, den Transport der Saatkörner in dem Fallrohr 10 mittels eines Luftstroms zu unterstützen, die über den Fallrohreingang 11 zusammen mit den Saatkörnern in dem Fallrohr 10 eingebracht werden kann, wie dies als solches bekannt ist, insbesondere in Verbindung mit Einzelsaatkorn-Sämaschinen.

Das Fallrohr 10 ist im Wesentlichen aufrechtstehend angeordnet und weist bei dem gezeigten Ausführungsbeispiel eine leichte seitliche Neigung zur Vertikalen auf. In einem unteren Abschnitt 13 des Fallrohrs 10 ist das Fallrohr 10 gekrümmt in eine Richtung entgegen der Fahrtrichtung, die mittels eines Pfeiles A angezeigt ist. Auf diese Weise werden die Saatkörner in einem hinteren Endbereich des Schneidscheibenpaares 2 oder hinter diesem in die mittels des Schneidscheibenpaares 2 hergestellte Saatfurche eingebracht.

Das Fallrohr 10 wird mit Hilfe einer Rohrhalteinrichtung 14 in der gezeigten Arbeitsstellung (vgl. insbesondere Fig. 3 und 4) in dem Zwischenraum 8 zwischen der ersten und der zweiten Schneidscheibe 3, 4 lagestabil gehalten. Die Rohrhalteinrichtung 14 ist mittels einer Befestigungseinrichtung 14a am Tragrahmen 9 befestigt, welche in Bezug auf den Zwischenraum 8 außenliegend gebildet ist. Ein Rohrhaltearm 15 der Rohrhalteeinrichtung 14 ist auf gegenüberliegenden Endseiten 16, 17 mit Hilfe der Befestigungseinrichtung 14a jeweils lösbar montiert und erfasst mit seiner gekrümmten Ausgestaltung einen Kreisbogenabschnitt in Bezug auf das Schneidscheibenpaar 2. Die erste Endseite 16 der Rohrhalteinrichtung 14, welche im gezeigten Beispiel an dem Rohrhaltearm 15 endseitig gebildet ist, ist an dem Scheibenhaltearm 6 lösbar montiert. Die gegenüberliegende zweite Endseite 17 der Rohrhalteinrichtung 14, welche im gezeigten Beispiel an dem Rohrhaltearm 15 endseitig gebildet ist, ist an einem Hebelarm 18, welcher das Schneidscheibenpaar 2 im Wesentlichen vollständig übergreift, lösbar montiert. Die lösbare Montage im Bereich beider Endseiten 16, 17 unterstützt eine einfache Montage und Demontage der Rohrhalteeinrichtung 14 mit dem hieran gehaltenen und angeformten Fallrohr 10.

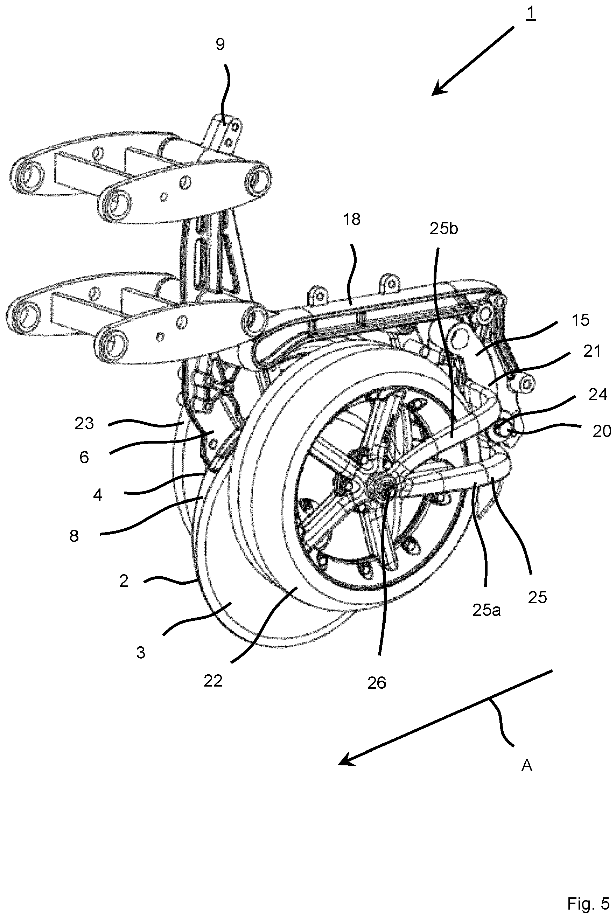

Die zweite Endseite 17 der Rohrhalteinrichtung 14 ist über einen abstehenden Arm 19, welcher im gezeigten Beispiel an dem Rohrhaltearm 15 endseitig gebildet ist, oberhalb einer Lagerung 20 für eine schwenkbare Aufnahme einer Radehalteeinrichtung 21 angeordnet, mit der Tiefeneinstellräder 22, 23, die bei den Darstellungen in den Fig. 1 bis 4 zur Vereinfachung nicht gezeigt sind und auf gegenüberliegenden Seiten des Schneidscheibenpaares 2 angeordnet sind (vgl. Fig. 5), gehalten werden. Mittels der schwenkbaren Lagerung 20 sind die Tiefeneinstellräder 22, 23 relativ zum Schneidscheibenpaar 2 um eine Schwenkachse verlagerbar, um so für dieses eine Bodenarbeitstiefe bei der Bodenbearbeitung zum Ausbilden der Saatfurche einzustellen.

Ein Radhaltearm 25 der Radhalteeinrichtung 21, welcher im gezeigten Beispiel endseitig zusammenlaufende Teilarme 25a, 25b aufweist, verläuft in Bezug auf das Schneidscheibenpaar 2 sowie das jeweilige Tiefeneinstellrad 22, 23 außenliegend und weist endseitig eine Radachseneinrichtung 26 zur drehbaren Lagerung des jeweiligen Tiefeneinstellrads 22, 23 auf. Zur vereinfachten Darstellung ist bei der Anordnung 1 in Fig. 5 das Fallrohr 10 nicht gezeigt.

An der Rohrhalteeinrichtung 14 sind beidseitig des Fallrohrs 10 ein Stützelemente 27 angeformt sein (vgl. Fig. 4), welche das Fallrohr 10 stützen und zumindest teilweise im Zwischenraum 8 zwischen der ersten und der zweiten Schneidscheibe 3, 4 angeordnet sind. Das Stützelemente 27 fördern eine Versteifung des Fallrohrs 10 und somit eine mechanische Stabilisierung des sich in den Zwischenraum 8 zwischen der ersten und der zweiten Schneidscheibe 3, 4 erstreckenden Fallrohrs 10, so dass dieses möglichst lagestabil zwischen den Schneidscheiben 3, 4 gehalten wird.

An dem Fallrohr 10 ist beim gezeigten Beispiel weiterhin außenseitig ein das Fallrohr 10 mechanisch stabilisierendes Versteifungsbauteil 28 angeordnet, welches zumindest teilweise im Zwischenraum 8 zwischen der ersten und der zweiten Schneidscheibe 3, 4 angeordnet ist, insbesondere im unteren gekrümmten Abschnitt 13 des Fallrohrs 10 (vgl. Fig. 4).

An der Rohrhalteeinrichtung können eine oder mehrere Versteifungsrippen ausgebildet sein, zum Beispiel am Rohrhaltearm und / oder am Monobauteil, beispielweise in Längsrichtung und / oder quer zur Längsrichtung des Rohrhaltearms / Monobauteil. Insbesondere in Längsrichtung verlaufende Verstärkungsrippen können den außenliegenden Abschnitt im Wesentlichen vollständig erfassend ausgebildet sein.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung (1) für eine Säreihe einer landwirtschaftlichen Sämaschine, mit
- einem Tragrahmen (9);
- einem Schneidscheibenpaar (2), bei dem eine erste und eine zweite Schneidscheibe (3, 4) einander gegenüberliegend und so einen Zwischenraum (8) ausbildend angeordnet sind, wobei das Schneidscheibenpaar (2) eingerichtet ist, bei einer Bodenbearbeitung eine Saatfurche zum Aufnehmen von auszubringendem Saatgut herzustellen;
- einer am Tragrahmen (9) gebildeten Scheibenhalteeinrichtung (5), mittels welcher die erste und die zweite Schneidscheibe (3, 4) jeweils drehbar gelagert sind;
- einem Fallrohr (10), welches sich zumindest abschnittsweise in dem Zwischenraum (8) zwischen der ersten und der zweiten Schneidscheibe (3, 4) erstreckt und endseitig einen Fallrohrausgang (12) zum Ausbringen des Saatguts zur Saatfurche hinaufweist; und
- einer das Fallrohr (10) haltenden Rohrhalteeinrichtung (14), die mittels einer Befestigungseinrichtung (14a) am Tragrahmen (9) angeordnet ist;
wobei die Befestigungseinrichtung (14a) der Rohrhalteeinrichtung (14) in Bezug auf den Zwischenraum (8) zwischen der ersten und der zweiten Schneidscheibe (3, 4) außenliegend gebildet ist.

2. Anordnung (1) nach Anspruch 1, **dadurch gekennzeichnet, dass** die Rohrhalteeinrichtung (14) einen Rohrhaltearm (15) aufweist, welcher sich in Bezug auf die erste und die zweite Schneidscheibe (3, 4) entlang eines Kreisbogenabschnitts erstreckt.

3. Anordnung (1) nach Anspruch 2, **dadurch gekennzeichnet, dass** der Rohrhaltearm (15) im Bereich des Kreisbogenabschnitts den Zwischenraum (8) zwischen der ersten und der zweiten Schneidscheibe (3, 4) zumindest teilweise abdeckend ausgeführt ist.

4. Anordnung (1) nach mindestens einem der vorangehenden Ansprüche, **dadurch gekennzeichnet, dass** an der Rohrhalteeinrichtung (14) ein den Zwischenraum (8) zwischen der ersten und der zweiten Schneidscheibe (3, 4) oben abdeckendes Abdeckbauteil angeordnet ist.

5. Anordnung (1) nach mindestens einem der vorangehenden Ansprüche, **dadurch gekennzeichnet, dass** die Rohrhalteeinrichtung (14) mittels der Befestigungseinrichtung (14a) auf gegenüberliegenden Endseiten (16, 17) in Bezug auf den Zwischenraum (8) zwischen der ersten und der zweiten Schneidscheibe (3, 4) jeweils außenliegend an dem Tragrahmen (9) befestigt ist.

6. Anordnung (1) nach Anspruch 5, **dadurch gekennzeichnet, dass** eine in Fahrtrichtung bei der Bodenbearbeitung vorlaufende Endseite (16) der Rohrhalteeinrichtung (14) an einem ersten Rahmenbauteil des Tragrahmens (9) befestigt ist, welches mit der Scheibenhalteeinrichtung (5) gebildet ist.

7. Anordnung (1) nach Anspruch 5 oder 6, **dadurch gekennzeichnet, dass** eine in Fahrtrichtung bei der Bodenbearbeitung nachlaufende Endseite (17) der Rohrhalteeinrichtung (14) an einem zweiten Rahmenbauteil des Tragrahmens (9) befestigt ist, an dem eine Radhalteeinrichtung (21) zur drehbaren Lagerung von dem Schneidscheibenpaar (2) zugeordneten Tiefeneinstellrädern (22, 23) gebildet ist.

8. Anordnung (1) nach Anspruch 7, **dadurch gekennzeichnet, dass** sich die Rohrhalteeinrichtung (14) bis in einen Bereich oberhalb der Tiefeneinstellräder (22, 23) erstreckt.

9. Anordnung (1) nach mindestens einem der vorangehenden Ansprüche, **dadurch gekennzeichnet, dass** das Fallrohr (10) an der Rohrhalteeinrichtung (14) einstückig angeformt ist.

10. Anordnung (1) nach mindestens einem der vorangehenden Ansprüche, **dadurch gekennzeichnet, dass** das Fallrohr (10) an der Rohrhalteeinrichtung (14) in einem Durchbruch aufgenommen ist.

11. Anordnung (1) nach mindestens einem der vorangehenden Ansprüche, **dadurch gekennzeichnet, dass** die Rohrhalteeinrichtung (14) als Monobauteil ausgeführt ist, welches auf gegenüberliegenden Endseiten mittels der Befestigungseinrichtung (14a) am Tragrahmen (9) befestigt ist.

12. Anordnung (1) nach mindestens einem der vorangehenden Ansprüche, **dadurch gekennzeichnet, dass** an der Rohrhalteeinrichtung (14) ein Stützelement (27) angeformt ist, welches das Fallrohr (10) stützt und zumindest teilweise im Zwischenraum (8) zwischen der ersten und der zweiten Schneidscheibe (3, 4) angeordnet ist.

13. Anordnung (1) nach mindestens einem der vorangehenden Ansprüche, **dadurch gekennzeichnet, dass** an dem Fallrohr (10) außenseitig ein das Fallrohr (10) mechanisch stabilisierendes Versteifungsbauteil (28) angeordnet ist, welches zumindest teilweise im Zwischenraum (8) zwischen der ersten und der zweiten Schneidscheibe (3, 4) angeordnet ist.

14. Säreihe für eine Sämaschine, mit einer Anordnung (1) nach mindestens einem der vorangehenden Ansprüche.

15. Landwirtschaftliche Sämaschine, mit einer Säreihe nach Anspruch 14.
